# EUROPEAN PATENT APPLICATION

(11) **EP 3 382 687 A1**
(43) Date of publication of application: **03.10.2018**
(21) Application number: 17162987.6
(22) Date of filing: 27.03.2017
(51) Int. Cl.: G09G 3/34, G02B 5/08, G09F 19/16, G09G 5/12, G06T 5/50, H04N 5/225, H04N 5/232, H04N 5/235, H04N 5/357

(54) **APPARATUS FOR PROVIDING SEMANTIC INFORMATION AND METHODS OF OPERATING THE SAME**

(71) Applicant: Koninklijke Philips N.V., 5656 AE Eindhoven (NL)
(72) Inventor: Buil, Vincentius Paulus, 5656 AE Eindhoven (NL); de Bruijn, Frederik Jan, 5656 AE Eindhoven (NL)
(74) Representative: de Haan, Poul Erik

(57) **Abstract**

According to an aspect, there is provided a method of operating an apparatus to provide semantic information to a user, the method comprising emitting light conveying semantic information using a light emitting portion, wherein the light emitting portion flickers between emitting the light conveying the semantic information and not emitting the light conveying the semantic information; obtaining a video sequence comprising a plurality of image frames, wherein the video sequence comprises at least a first image frame that is obtained when the light emitting portion is emitting light conveying the semantic information and at least a second image frame that is obtained when the light emitting portion is not emitting light conveying the semantic information; processing the first image frame and the second image frame to determine a colour-casting and/or illumination effect of the light conveying the semantic information on the user; determining a corrected first image frame from the first image frame and the determined colour-casting effect and/or determining a corrected second image frame from the second image frame and the determined illumination effect; and providing the corrected image frame to the display screen as part of a video sequence for display to the user.

## Description

### TECHNICAL FIELD OF THE INVENTION

The invention relates to apparatus that comprises a camera and a display screen, and that can use light to provide semantic information to a user of the apparatus.

### BACKGROUND OF THE INVENTION

During personal care activities a mirror is often used. Such mirrors should provide the user with good visibility of the face and/or body, e.g. to support the application of make-up to the face, carrying out skin care activities, grooming (e.g. shaving or hair trimming), oral care, applying or removing contact lenses, etc.

To improve the lighting conditions and thus improve the visibility of the user's face and/or body in the mirror, one or more light sources are often used to illuminate the user. These light source(s) can be integrated with the mirror (for example located in or on one or more edges of the mirror), or they can be separate from the mirror.

As an alternative to traditional mirrors that include a reflective surface, so-called 'virtual mirrors' or 'digital mirrors' have been developed that use one or more cameras or other image or video capture devices to capture images or video of the user and present them on a display screen in real-time (or near-real time). These images or video can be inverted horizontally to replicate a 'mirror image' for the user. These virtual mirrors can also have an integrated or separate lighting system for improving the lighting conditions and thus improve the displayed image of the user.

It will be noted that this form of 'virtual mirror' is the same as the live image stream provided by a front-facing camera on a smart phone or other electronic device (i.e. a camera that faces the user when the user is viewing a screen of the device). Thus, images of the user's face are recorded and immediately displayed on the display.

### SUMMARY OF THE INVENTION

To improve the performance of personal care activities, it has been suggested that mirrors (whether reflective surface-based or virtual) can be used to present information to the user about the personal care activity while the user is using the mirror. Similarly, while a user is using a mirror, the mirror can be used to present other relevant information to the user, for example the news headlines or a weather report.

For some semantic information (e.g. information relating to the performance of the personal care activities or other information that is useful to the user) it is possible to provide the information to the user using a display integrated into the mirror or part of the display in the case of a virtual mirror. However, this is not always desirable as the displayed information can interfere with (e.g. overlay) the mirror image of the user. Instead, it is proposed to present 'semantic information' to the user using a lighting system that is integrated or used with mirrors, or a separate lighting system that is provided in, on or with the mirror for the specific purpose of providing semantic information.

However, it is also desirable for the user to be evenly lit (either with the ambient light or by the integrated or separate lighting system) so that the user can optimally see their face and/or body in the mirror during a personal care activity, and using light to present semantic information to the user can affect the evenness of the lighting on the user (and thus on the image of the user presented by the mirror). For example, red light can be used to signify to the user that they have not brushed their teeth for a sufficient amount of time, but this will also cast red light onto the user's face and/or create shadows on the user's face, which will be visible to the user in the mirror.

Thus, there is a need for an improved apparatus and method of operating an apparatus that minimises the effect of light conveying semantic information on a presented image of a user.

According to a first aspect, there is provided a method of operating an apparatus to provide semantic information to a user, the method comprising emitting light conveying semantic information using a light emitting portion, wherein the light emitting portion flickers between emitting the light conveying the semantic information and not emitting the light conveying the semantic information; obtaining a video sequence comprising a plurality of image frames, wherein the video sequence comprises at least a first image frame that is obtained when the light emitting portion is emitting light conveying the semantic information and at least a second image frame that is obtained when the light emitting portion is not emitting light conveying the semantic information; processing the first image frame and the second image frame to determine a colour-casting and/or illumination effect of the light conveying the semantic information on the user; determining a corrected first image frame from the first image frame and the determined colour-casting effect and/or determining a corrected second image frame from the second image frame and the determined illumination effect; and providing the corrected image frame to the display screen as part of a video sequence for display to the user.

In some embodiments, the step of processing comprises determining a difference between the first image frame and the second image frame.

In some embodiments, the step of processing comprises determining a light contribution of the light conveying semantic information on each pixel in the first image frame by determining the difference between the pixel value of each pixel in the first image frame and the pixel value of the corresponding pixel in the second image frame.

The step of determining can comprise processing the determined colour-casting and/or illumination effect of the light conveying the semantic information on the user to chromatically correct each determined difference value to a white balanced value. The step of determining can further comprise correcting the amplitude of each chromatically-corrected difference value to a common level. In some embodiments, the step of determining comprises combining the amplitude and chromatically-corrected difference values with the first image frame to determine a corrected first image frame. In some embodiments, the step of determining comprises combining the amplitude and chromatically-corrected difference values with the second image frame to determine a corrected second image frame.

In some embodiments, the step of processing comprises determining a colour-casting effect of the light conveying the semantic information on the user, the step of determining comprises determining a corrected first image frame from the first image frame and the determined colour-casting effect; the step of providing comprises providing the corrected first image frame to the display screen as part of a video sequence for display to the user; and the second image frame is not provided to the display screen as part of the video sequence.

In some embodiments, the step of processing comprises determining an illumination effect of the light conveying the semantic information on the user, the step of determining comprises determining a corrected second image frame from the second image frame and the determined illumination effect; the step of providing comprises providing the corrected second image frame to the display screen as part of a video sequence for display to the user; and the first image frame is not provided to the display screen as part of the video sequence.

In some embodiments, prior to the step of processing the method further comprises the steps of processing the first image frame and the second image frame to determine a colour-casting effect of ambient light on the user; and correcting the first image frame and the second image frame based on the determined colour-casting effect of ambient light. The step of processing the first image frame and the second image frame to determine a colour-casting effect of ambient light on the user can comprise comparing a reference image frame in which the user is illuminated by white light to the first image frame and the second image frame.

In some embodiments, the step of obtaining comprises obtaining a plurality of consecutive first image frames that are obtained when the light emitting portion is emitting light conveying the semantic information and a second image frame that is obtained when the light emitting portion is not emitting light conveying the semantic information, the step of determining comprises determining a plurality of corrected first image frames from the plurality of consecutive first image frames and a determined colour-casting effect and the step of providing comprises providing the plurality of corrected first image frames to the display screen as part of a video sequence for display to the user. In some embodiments, the method further comprises the step of analysing each of the plurality of first image frames and the second image frame to identify segments based on reference points on a face of the user identified in the image frames; the step of processing comprises determining a colour-casting effect of the light conveying the semantic information on the user for each segment; and wherein the step of determining a corrected plurality of first image frames comprises applying the determined colour-casting effect for each segment to the respective segment in each of the plurality of first image frames.

In some embodiments, the steps of processing, determining and providing are performed for a plurality of first image frames and second image frames to form the video sequence to be displayed to the user.

A computer program product comprising a computer readable medium having computer readable code embodied therein, the computer readable code being configured such that, on execution by a suitable computer or processor, the computer or processor is caused to perform any of the methods described above.

According to a third aspect, there is provided an apparatus comprising an imaging device for obtaining a video sequence, the video sequence comprising a plurality of image frames; a display screen for presenting a plurality of image frames; a light emitting portion for using light to convey semantic information to the user, wherein the light emitting portion is configured to flicker between emitting the light conveying the semantic information and not emitting the light conveying the semantic information; and a control unit. The imaging device is configured to obtain at least a first image frame when the light emitting portion is emitting light conveying the semantic information and at least a second image frame when the light emitting portion is not emitting light conveying the semantic information, and the control unit is configured to process the first image frame and the second image frame to determine a colour-casting and/or illumination effect of the light conveying the semantic information on the user; determine a corrected first image frame from the first image frame and the determined colour-casting effect and/or determine a corrected second image frame from the second image frame and the determined illumination effect; and control the display screen to present the corrected image frame to the user as part of a video sequence.

In some embodiments, the control unit is configured to process the first image frame and the second image frame by determining a difference between the first image frame and the second image frame.

In some embodiments, the control unit is configured to process the first image frame and the second image frame to determine a light contribution of the light conveying semantic information on each pixel in the first image frame by determining the difference between the pixel value of each pixel in the first image frame and the pixel value of the corresponding pixel in the second image frame.

The control unit can be configured to determine a corrected image frame by processing the determined colour-casting and/or illumination effect of the light conveying the semantic information on the user to chromatically correct each determined difference value to a white balanced value. The control unit can be further configured to determine a corrected image frame by correcting the amplitude of each chromatically-corrected difference value to a common level. In some embodiments, the control unit is configured to determine a corrected first image frame by combining the amplitude and chromatically-corrected difference values with the first image frame. In some embodiments, the control unit is configured to determine a corrected second image frame by combining the amplitude and chromatically-corrected difference values with the second image frame.

In some embodiments, the control unit is configured to process the first image frame and the second image frame by determining a colour-casting effect of the light conveying the semantic information on the user, the control unit is configured to determine a corrected first image frame from the first image frame and the determined colour-casting effect; the control unit is configured to provide the corrected first image frame to the display screen as part of a video sequence for display to the user; and the control unit is configured to not provide the second image frame to the display screen as part of the video sequence.

In some embodiments, the control unit is configured to process the first image frame and the second image frame by determining an illumination effect of the light conveying the semantic information on the user, the control unit is configured to determine a corrected second image frame from the second image frame and the determined illumination effect; the control unit is configured to provide the corrected second image frame to the display screen as part of a video sequence for display to the user; and the control unit is configured to not provide the first image frame to the display screen as part of the video sequence.

In some embodiments, prior to the control unit processing the first image frame and the second image frame, the control unit is further configured to process the first image frame and the second image frame to determine a colour-casting effect of ambient light on the user; and correct the first image frame and the second image frame based on the determined colour-casting effect of ambient light. The control unit can be configured to processing the first image frame and the second image frame to determine a colour-casting effect of ambient light on the user by comparing a reference image frame in which the user is illuminated by white light to the first image frame and the second image frame.

In some embodiments, the imaging unit is configured to obtain a plurality of consecutive first image frames when the light emitting portion is emitting light conveying the semantic information and a second image frame that is obtained when the light emitting portion is not emitting light conveying the semantic information, the control unit is configured to determine a plurality of corrected first image frames from the plurality of consecutive first image frames and a determined colour-casting effect and the control unit is configured to provide the plurality of corrected first image frames to the display screen as part of a video sequence for display to the user. In some embodiments, the control unit is further configured to analyse each of the plurality of first image frames and the second image frame to identify segments based on reference points on a face of the user identified in the image frames; the control unit is configured to process the first image frame and the second image frame to determine a colour-casting effect of the light conveying the semantic information on the user for each segment; and the control unit is configured to determine a corrected plurality of first image frames by applying the determined colour-casting effect for each segment to the respective segment in each of the plurality of first image frames.

In some embodiments, the control unit is configured to process, determine and provide for a plurality of first image frames and second image frames to form the video sequence to be displayed to the user.

According to a fourth aspect, there is provided another method of operating an apparatus to provide semantic information to a user, the method comprising emitting light conveying semantic information using a light emitting portion, wherein the light emitting portion flickers between emitting the light conveying the semantic information and not emitting the light conveying the semantic information; obtaining a video sequence comprising a plurality of image frames; and providing image frames obtained when the light emitting portion is not emitting the light conveying the semantic information to a display screen for display to the user.

In some embodiments, the step of obtaining comprises obtaining images frames only when the light emitting portion is not emitting the light conveying the semantic information. In these embodiments, the step of providing can comprise providing all of the obtained images to the display screen.

In alternative embodiments, the step of providing comprises identifying which of the obtained image frames were obtained when the light emitting portion was not emitting the light conveying the semantic information; and providing the identified image frames to the display screen.

In some embodiments, the light emitting portion emits white light in the part of the flicker cycle in which the light emitting portion is not emitting the light conveying the semantic information.

In alternative embodiments, a second light source emits white light in the part of the flicker cycle in which the light emitting portion is not emitting the light conveying the semantic information.

According to a fifth aspect, there is provided a A computer program product comprising a computer readable medium having computer readable code embodied therein, the computer readable code being configured such that, on execution by a suitable computer or processor, the computer or processor is caused to perform any of the methods described above.

According to a sixth aspect, there is provided an apparatus comprising an imaging device for obtaining a video sequence, the video sequence comprising a plurality of image frames; a display screen for presenting a plurality of image frames; a light emitting portion for using light to convey semantic information to the user, wherein the light emitting portion is configured to flicker between emitting the light conveying the semantic information and not emitting the light conveying the semantic information; and a control unit. The control unit is configured to provide image frames obtained by the imaging device when the light emitting portion is not emitting the light conveying the semantic information to the display screen.

In some embodiments, the imaging device is configured to be controlled to obtain images frames only when the light emitting portion is not emitting the light conveying the semantic information. In these embodiments, the control unit is configured to provide all of the obtained images to the display screen.

In other embodiments, the control unit is configured to identify which of the obtained image frames were obtained when the light emitting portion was not emitting the light conveying the semantic information; and to provide the identified image frames to the display screen.

In some embodiments, the light emitting portion is configured to emit white light in the part of the flicker cycle in which the light emitting portion is not emitting the light conveying the semantic information.

In alternative embodiments, the apparatus further comprises a second light source that is configured to emit white light in the part of the flicker cycle in which the light emitting portion is not emitting the light conveying the semantic information.

### BRIEF DESCRIPTION OF THE DRAWINGS

For a better understanding of the invention, and to show more clearly how it may be carried into effect, reference will now be made, by way of example only, to the accompanying drawings, in which:
Figure 1 is a block diagram of an apparatus according to an embodiment of the invention;
Figure 2 illustrates examples of providing semantic information using light;
Figure 3 is a diagram illustrating a series of image frames and a flicker cycle of a light emitting portion;
Figure 4 is a flow chart of a method according to an aspect;
Figure 5 is a flow chart of a method according to another aspect;
Figure 6 is a flow chart illustrating an implementation of the steps in the method of Figure 5; and
Figure 7 is a flow chart illustrating another implementation of the steps in the method of Figure 5.

### DETAILED DESCRIPTIO OF THE PREFERRED EMBODIMENTS

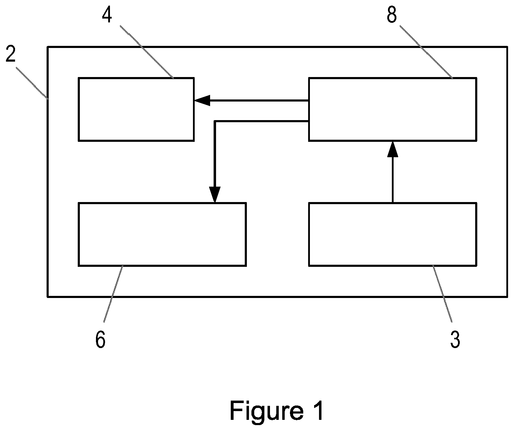

Figure 1 shows an example of an apparatus 2 according to an embodiment of the invention. The apparatus 2 is generally for allowing a user to view themselves and for providing semantic information to the user. The apparatus 2 comprises an imaging device 3, such as a camera, image sensor or video sensor, that is for capturing a series of image frames (i.e. a video sequence) of the user of the apparatus 2 and a display screen 4 that displays an image frame or video sequence obtained by the imaging device 3. In accordance with some embodiments of the invention described below, one or more image frames in the video sequence may be processed, modified or corrected prior to display by the display screen 4.

As is known, a video sequence comprises a series of images or image frames obtained periodically with a certain frame rate, which is known as the number of frames per second, fps. For example a video sequence can be obtained at 24 fps (so there are 24 image frames per second, with an image frame being obtained/recorded every 1/24^{th} of a second), 60 fps (so there are 60 image frames per second, with an image frame being obtained/recorded every 1/60^{th} of a second), 240 fps (although in this case image frames tend to contain more noise than at lower frame rates, so multiple image frames can be combined to produce noise-reduced image frames, and also the frame rate of the displayed video sequence may be much lower, e.g. 60 fps), etc. Each image frame will have a certain resolution, which is typically measured in terms of the total number of pixels in the image frame, by the number of pixels in the horizontal and vertical directions in the image frame and/or by the number of horizontal lines in the image frame. The imaging device 3 can obtain a video sequence (series of image frames) at any suitable or desired resolution and frame rate. Each pixel in an image frame can have a pixel value that represents the image information for that pixel. For example, each pixel can have a value that represents the brightness of the pixel on a grey scale (e.g. for a grey or a black and white image) or a value that represents a respective brightness for a plurality of different colours (e.g. respective values for red, green and blue, RGB). Alternatively, each pixel can be defined in terms of a luminance (brightness) component and two chrominance components (this is known as YUV).

The imaging device 3 can be arranged or oriented with respect to the display screen 4 such that the captured image or video sequence of the user is presented to the user on the display screen 4. It will be appreciated that the video sequence can be presented to the user as a 'mirror image' (i.e. in the same way that a conventional mirror would do), with each image in the video sequence being reflected around a vertical axis in order for the image or video sequence displayed on the display screen to represent the user's 'reflection'. Alternatively the video sequence can be displayed without reflection around a vertical axis.

In some embodiments, the apparatus 2 can be in the form of a so-called 'virtual mirror' or digital mirror, for example provided specifically for the purpose of presenting a mirror image/reflection of a user of the apparatus 2. Such virtual mirrors can be provided, for example, for use in a bathroom or bedroom environment. In other embodiments, the apparatus 2 can be any type of electronic device that has a display screen and an imaging device that is arranged to obtain images or a video sequence of a user of the apparatus 2 when the user is viewing the display screen. For example the apparatus 2 can be in the form of an electronic device such as a smart phone, tablet, laptop, desktop computer, etc., that has a front-facing camera or imaging device.

The apparatus 2 provides semantic information to the user using a light emitting portion 6. In particular, the light emitting portion 6 is for emitting light in certain configurations, patterns, colours, etc. in order to convey information to the user. The light emitting portion 6 may be configured or controllable to provide or display words, numerals, symbols, images and/or patterns that are each associated with certain semantic information. The semantic information can be information relating to the performance of a personal care activity by the user or other information that is useful to the user, such as the news headlines or weather.

The light emitting portion 6 typically comprises a plurality of light emitting elements. The light emitting elements can be light emitting diodes, LEDs, organic LEDs, OLEDs, filament-based bulbs, compact fluorescent lamps, CFLs, halogen bulbs, etc. The light emitting elements can be of different sizes, shapes and/or colours (or have a controllable colour) and each light emitting element can be controlled individually or in combination with one or more other light emitting elements. One or more, or all, of the light emitting elements can be controlled at any given time to provide semantic information to the user. The light emitting elements may also be part of display screen 4, for example pixels at the edge of the display screen 4 may be used to emit the light conveying the semantic information to the user.

The apparatus 2 comprises a control unit 8 that controls the operation of the apparatus 2, and in particular controls the operation of the imaging device 3, the display device 4 and the light emitting portion 6. The control unit 8 can control the imaging device 3 to capture or obtain images or a video sequence when required, control the display screen 4 to display captured and/or processed/corrected images or parts of the video sequence and control the light emitting portion 6 to provide semantic information to the user, as required. Furthermore, in some embodiments, the control unit 8 processes the obtained images/video sequence to modify or correct them prior to the display of the images or video sequence by the display screen 4.

Where the light emitting portion 6 comprises a plurality of light emitting elements, the control unit 8 can control the light emitting elements, individually and/or in combination in order to provide the semantic information. It will be appreciated that the control unit 8 can determine the semantic information that is to be provided to the user using the light emitting portion 6, for example by monitoring the user using one or more sensors or personal care devices, and/or by obtaining information to be presented to the user (e.g. news headlines or a weather report) from an external information source (e.g. the internet).

The control unit 8 can be implemented in numerous ways, with software and/or hardware, to perform the required function(s). The control unit 8 may comprise one or more microprocessors that may be programmed using software to perform the required functions. The control unit 8 may be implemented as a combination of dedicated hardware to perform some functions and a processor (e.g., one or more programmed microprocessors and associated circuitry) to perform other functions. Examples of controller components that may be employed in various embodiments of the present disclosure include, but are not limited to, conventional microprocessors, application specific integrated circuits (ASICs), and field-programmable gate arrays (FPGAs).

In some embodiments, in order for the face and/or body of the user to be well-lit when using the apparatus 2 (i.e. to make it easier for the user to see themselves in the display screen 4), the apparatus 2 can further comprise another light source (not shown in Figure 1) that is provided for the purpose of evenly lighting the user while they are using the apparatus 2. As with the light emitting portion 6 above, this light source can comprise one or more LEDs, OLEDs, filament-based bulbs, CFLs, halogen bulbs, etc.

Alternatively, where only part of the light emitting portion 6 is being used to provide semantic information to the user at any given time, the other part of the light emitting portion 6 can be used to illuminate the user of the apparatus 2. This avoids the need for a separate light source to be provided for illuminating the user.

In another alternative, the or part of the light emitting portion 6 can alternate (flicker) between providing the light conveying the semantic information and providing illumination for the user. I.e. the light emitting portion 6 can flicker between the light conveying the semantic information and white light.

In some embodiments, the light emitting portion 6 (and thus the light emitting elements) is arranged next to, in, on, or partly or completely surrounding the display screen 4. Thus, for example, the light emitting portion 6 can form a border for the display screen 4, although those skilled in the art will be aware of other ways in which the light emitting portion 6 and the display screen 4 can be arranged. For example, the light emitting portion 6 can be arranged along one or more sides of the display screen 6, or arranged to primarily illuminate a wall or other surface behind the display screen 4 so that the user can perceive the semantic information from the light illuminating the wall or other surface. In some embodiments, part of the display screen 4 can be used as the light emitting portion 6. Thus, for example, a section or sections of the display screen 4, for example around the edge of the display screen 4, could be used to provide the semantic information to the user, and/or to provide the illumination of the user.

In some examples, the semantic information provided by the light emitting portion can relate to time, for example a counter, timer or a progress bar relating to the time remaining on a counter for a personal care activity, such as brushing teeth. Another example of semantic information relating to a personal care activity can be an indication of which area(s) of the face have/have not been cleaned or shaved, or which quadrants of the mouth have/have not been brushed when brushing teeth. A further example of semantic information can include an indication of whether the pressure applied by the user in brushing their teeth or exfoliating their skin is sufficient (or excessive). A further example of semantic information is an indication of whether the position or orientation of a personal care device (e.g. a toothbrush, shaver, hair trimmer, etc.) is correct. Yet another example of semantic information that may be displayed by the light emitting portion 6 includes health information such as body weight, body weight trends. Those skilled in the art will be aware of many other types of semantic information that could be presented to a user using light from a light emitting portion 6.

It will be appreciated that an actual implementation of an apparatus 2 according to the invention may comprise additional components to those shown in Figure 1. For example the apparatus 2 can comprise a power source, such as a battery or power cell, or means to connect the apparatus 2 to a mains power supply. Alternatively or in addition the apparatus 2 can comprise one or more user interface components, such as switches, buttons, controls, etc. that enable the user to activate/deactivate the apparatus 2 and/or to control other functions of the apparatus 2.

It will also be appreciated that the various components of the apparatus 2, namely the imaging device 3, the display screen 4, the light emitting portion 6 and the control unit 8, can be integrated into a single device or unit, or they can be distributed across two or more devices or units. For example the light emitting portion 6 can be a separate component to the imaging device 3 and display screen 4, or the imaging device 3 can be a separate component to the display screen 4 and light emitting portion 6. In some embodiments, the control unit 8 can be remote from the imaging device 3, display screen 4 and light emitting portion 6, for example as part of a computer or other electronic device in the home of the user, or as part of a server in a remote location. In these embodiments, the image frames or video obtained by the imaging device 3 can be communicated to the control unit 8 directly or indirectly (e.g. via the Internet) by any suitable communication means, such as a wireless communication technology, e.g. Bluetooth, ZigBee, Wi-Fi, or any of the cellular data communication standards, referred to generally as 3G, 4G, 5G, etc. However, it will be appreciated that it may be preferable for the control unit 8 to be local to the imaging device 3 and display screen 4 in order to reduce the delay between the image frame/video capture and the display of the image frames/video on the display screen 4.

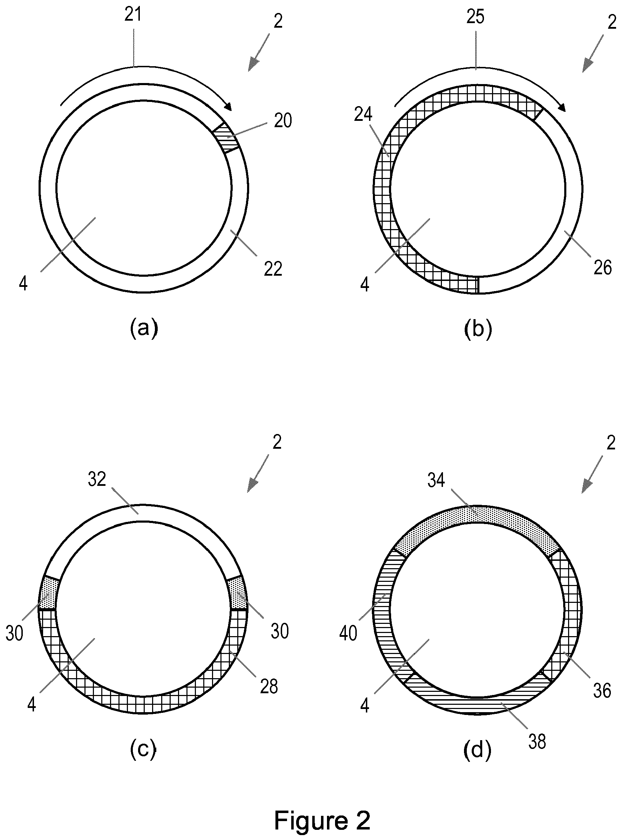

Figure 2 illustrates four examples of how semantic information can be indicated to a user using light. In Figure 2, the apparatus 2 is shown with a circular display screen 4 where the light emitting portion 6 extends around the complete periphery of the display screen 4. It will be appreciated that the display screen 4 can have a different shape to that shown, and/or the light emitting portion 6 can be arranged differently (e.g. just on part of the sides, or within the periphery of the display screen 4).

Thus, in Figure 2(a), the semantic information is provided by emitting light from a small segment 20 of the light emitting portion 6, and moving the segment 20 around the display screen 4 over time, as indicated by the arrow 21. This can be used, for example, to indicate a time elapsed or time remaining for a personal care activity. In some embodiments, the light emitting portion 6 itself does not move, and the 'movement' of the segment 20 is achieved by selectively illuminating different (e.g. successive) parts of the light emitting portion 6 over time. The segment 20 may be provided by one or more of the light emitting elements in the light emitting portion 6. In some embodiments the other part 22 of the light emitting portion 6 (i.e. the parts other than segment 20), can be switched off while segment 20 is lit, but in other embodiments part 22 can be continuously lit, and/or lit in a different colour or intensity to the segment 20 in order to illuminate the user. As an alternative to the above embodiment, the apparatus 2 can be configured to move the light emitting portion 6 in order to provide the effect of a moving segment 20.

The illumination shown in Figure 2(b) can be used to illustrate time elapsed. In this example, a progress/timer bar segment 24 is gradually increased in size as time elapses. Thus, as time elapses, more parts of the light emitting portion 6 are lit to form the progress/timer bar 24, as indicated by arrow 25. As with the example in Figure 2(a), the remaining segment 26 of the light emitting portion 6 can be switched off until required, or it can be continuously lit and/or lit in a different colour or intensity to the bar 24 in order to illuminate the user.

In Figure 2(c), the semantic information is in the form of a trend/status indicator 28, 30, where status/trend against a target is indicated by how much of the trend/status bar 28, 30 is lit. This can be used, for example, to show whether the user is applying the correct pressure with a toothbrush, where the correct amount of pressure corresponds to bar 28 being completely lit, and where an excess amount of pressure corresponds to bar 30 being lit as well (for example in red to indicate that the user is pressing too hard). As with the examples in Figures 2(a) and 2(b), the remaining segment(s) 32 of the light emitting portion 6 can be switched off, or they can be continuously lit and/or lit in a different colour or intensity to the bar 28, 30 in order to illuminate the user.

Figure 2(d) shows a form of illumination that can be used to represent whether a user has brushed the teeth in each quadrant of their mouth correctly. Thus, the light emitting portion 6 is divided into four segments 34, 36, 38, 40, that each represent a respective quadrant of the mouth. In this example, the colour of each segment 34, 36, 38, 40 is used to indicate whether the corresponding quadrant has been brushed correctly. Thus, segment 38 and 40 could be green to indicate that those quadrants have been brushed correctly, segment 36 could be yellow to indicate that that quadrant has only been partially brushed, and segment 34 can be red to indicate that that quadrant has not been brushed at all. The colour of each segment can be controlled and updated as the user brushes their teeth.

As noted above, a problem exists in that it is desirable for a user to be evenly lit (either with the ambient light or by the light emitting portion 6 or separate light source) so that the user can optimally see their face and/or body in the display screen 4. However, using light to present semantic information to the user can affect the evenness of the lighting on the user (and thus on the image/video of the user presented by the display screen). For example, providing semantic information by emitting light (particularly non-white light) can cause colour-casting (including shadowing) on the user, and this shadowing and/or colour-casting will therefore be visible in the video sequence obtained by the imaging device 3 and displayed on the display screen 4.

In particular, the solutions described herein are based on the recognition that a light emitting portion 6 does not have to emit the light that conveys the semantic information (which is also referred to herein as 'semantic light') continuously in order for the information to be continuously conveyed to the user. It is known that a light source can be operated such that the light source alternately generates light and does not generate light (i.e. the light source 'flickers'), and provided that the frequency with which the light source switches between generating light and not generating light is high enough, a user will perceive the light source to be continuously generating light. Flicker can be caused by the nature of the light source itself, for example, a light source powered by a mains power source that provides an alternating current at a frequency of 50 Hz may generate light that flickers (switches on and off) 100 times per second. Alternatively a light source can be controlled to flicker at a required rate. In either case, this switching/flickering is not perceptible to most users and thus the light source appears to be continuously generating light. In the case of a light emitting portion 6 that is being used to convey semantic information, the same principle applies, and the light emitting portion 6 can flicker to convey the semantic information to the user at a suitably high frequency that the user perceives the light to be on continuously.

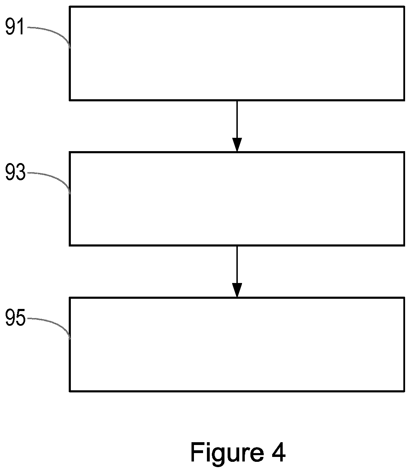

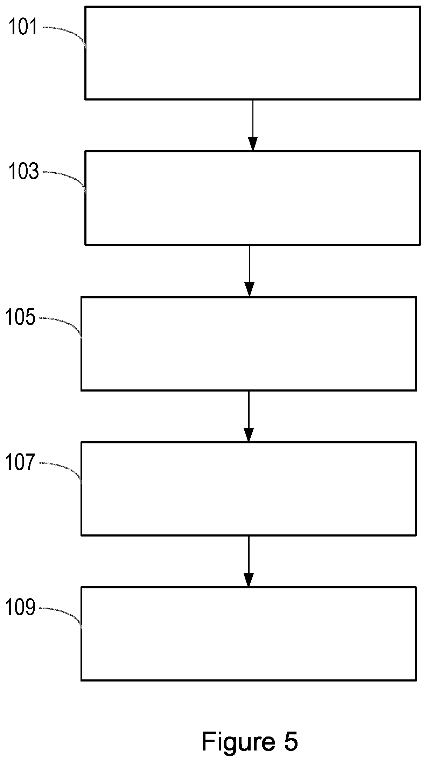

The techniques described herein make use of image frames that are obtained during the part of the flicker cycle in which the light emitting portion 6 is not generating light to address the problem of the user observing colour-casting on themselves in the video sequence displayed on the display screen 4. In some embodiments, which are described below with reference to Figure 4, only the image frames obtained during parts of the flicker cycle in which the light emitting portion 6 is not emitting the light conveying semantic information are used to form the video sequence displayed on the display screen 4. In this way, the user will not be presented with image frames in which there is a shadowing or colour-casting effect, and thus the problem described above is avoided. In other embodiments, which are described below with reference to Figures 5-8, one or more image frames obtained during parts of the flicker cycle in which the light emitting portion 6 is not emitting the semantic light are used in correcting the colour-casting effect of the semantic light in the image frames obtained during parts of the flicker cycle in which the light emitting portion 6 is emitting the semantic light.

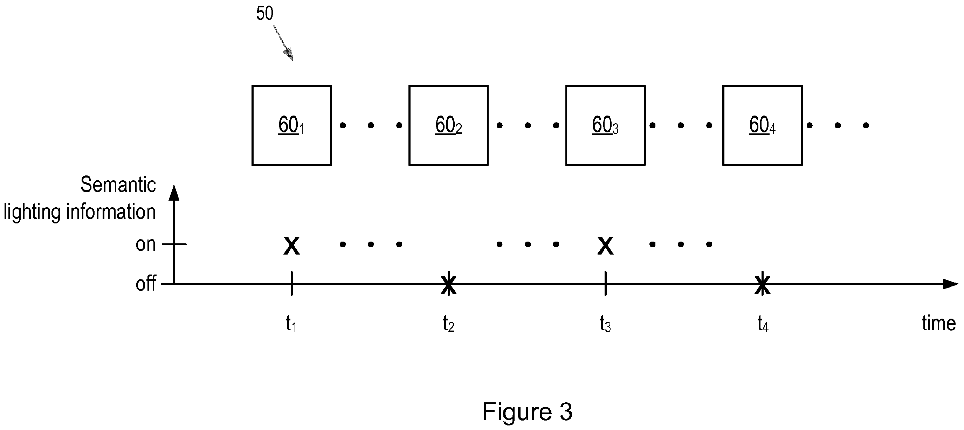

Figure 3 shows part of a video sequence 50 that comprises a plurality of image frames 60. Four image frames 60 are shown, which are labelled 60₁, 60₂, 60₃ and 60₄ respectively, and it will be appreciated that each image frame 60 is captured or obtained at a particular time point, shown as times t₁, t₂, t₃ and t₄ respectively. It will be appreciated that image frames 60₁, 60₂, 60₃ and 60₄ may be consecutive image frames 60 obtained by the imaging device 3 (i.e. there are no other image frames between image frames 60₁ and 60₂, between image frames 60₂ and 60₃, or between image frames 60₃ and 60₄) or there maybe one or more other image frames 60 between each of images frames 60₁, 60₂, 60₃ and 60₄.

Figure 3 also shows whether the light emitting portion 6 is emitting light conveying semantic information at the time that each image frame 60₁, 60₂, 60₃ and 60₄ is obtained. This part of Figure 3 illustrates the periodic flashing or flickering of the light emitting portion 6 over time. Thus, in the example shown in Figure 3, the light emitting portion 6 is emitting light conveying semantic information when images frames 60₁ and 60₃ are obtained, and the light emitting portion 6 is not emitting light conveying semantic information when images frames 60₂ and 60₄ are obtained.

It will be appreciated that the frame rate of the imaging device 3 that determines the rate at which the image frames 60 are obtained can be different to the rate at which the light emitting portion 6 flickers.

A first solution to the problem of light conveying semantic information causing colour-casting on the user, and thus on the video sequence displayed to the user, is described below with reference to Figure 4. In this solution, it is recognised that certain image frames 60 will be obtained during parts of the flicker cycle of the light emitting portion 6 when it is not emitting light that conveys semantic information, and thus only the image frames 60 obtained during parts of the flicker cycle in which the light emitting portion 6 is not emitting the light conveying semantic information are used to form the video sequence displayed on the display screen 4. In this way, the user will not be presented with image frames in which there is a colour-casting effect, and thus the problem described above is avoided.

Figure 4 is a flow chart illustrating a method of operating an apparatus 2 to provide semantic information to a user of the apparatus 2. It is assumed in the following method that the user is in front of the imaging device 3 so that the imaging device 3 captures a video sequence of the user and the user is able to view their 'reflection' (the recorded video sequence) on the display screen 4. However, it will be appreciated that the presence of the user in front of the imaging device 3 is not necessary for the invention to be performed. In a first step, step 91, light conveying semantic information is emitted by a light emitting portion 6. Light emitting portion 6 will emit the light with a flicker, which means that the light emitting portion 6 alternately emits light conveying semantic information and does not emit light. The frequency with which the light emitting portion 6 flickers is preferably high enough that most or all users of the apparatus 2 perceive the light emitting portion 6 to be 'on' (i.e. emitting light) continuously. A suitable frequency is 50Hz, but those skilled in the art will appreciate that other flicker frequencies can be used.

As noted above, light emitting portion 6 may 'naturally' flicker, e.g. light emitting portion 6 flickers in response to an alternating current (AC), or it may flicker at a desired rate under control of the control unit 8 or light emitting portion 6.

For the purposes of this method, it is assumed that the control unit 8 determines the semantic information to be conveyed by the light emitting portion 6 and controls the light emitting portion 6 accordingly. It will be appreciated that the type of semantic information, and/or the way in which the semantic information is to be conveyed (e.g. a continuous light, a moving segment 20, etc.) does not affect the flicker operation of the light emitting portion 6.

While the light emitting portion 6 is operating to emit light conveying the semantic information in step 91, a video sequence is obtained by the imaging device 3 (step 93). That is, the imaging device 3 obtains a series of image frames 60 as the light emitting portion 6 operates to convey the semantic information.

Then in step 95 image frames 60 obtained by the imaging device 3 when the light emitting portion 6 is not emitting the light conveying the semantic information are provided to the display screen 4 for display to the user. Thus the user will not be presented with image frames 60 in which there is a colour-casting effect.

In some embodiments, the imaging device 3 operates, or is controlled to operate, so that it only captures or obtains image frames 60 when the light emitting portion 6 is not emitting light that is conveying the semantic information. Thus, in the example shown in Figure 3, the imaging device 3 will only obtain image frames 60₂ and 60₄ since at these time instants (t₂ and t₄) the light emitting portion 6 is not emitting light conveying the semantic information. In these embodiments, the imaging device 3 can obtain image frames 60 at a rate (the frame rate) that aligns the capture of each image frame 60 with the part of the flicker cycle in which the light emitting portion 6 is not emitting light conveying the semantic information. For example the imaging device 3 can capture image frames 60 at a rate that matches the flicker frequency of the light emitting portion 6, with each captured image frame 60 corresponding to each part of the flicker cycle in which the light emitting portion 6 is not emitting light conveying the semantic information. In these embodiments, the control unit 8 can provide all of the obtained image frames 60 to the display screen 4 for presentation to the user of the apparatus 2.

One way in which to suppress the capture of image frames in the part of the flicker cycle in which the light emitting portion 6 is emitting light conveying the semantic information is for the imaging device 3 to make use of a shutter in front of the imaging device 3 that can block or prevent the capture of light during the semantic lighting phase. This has the advantage that the shutter (and the semantic light) can modulate at a frequency which is much higher than the camera frame rate.

Another way in which the capture of image frames in the part of the flicker cycle in which the light emitting portion 6 is emitting light conveying the semantic information can be suppressed or prevented is for the collection of electrons (i.e. charge) by an imaging sensor in the imaging unit 3 to be inhibited or prevented during the semantic lighting phase. This could be achieved using an electronic switch that is placed between the photo diode and the capacitive component that is collecting the charge per pixel. Such methods are found in imaging cameras that determine depth based on the time of flight of reflected light. Even at a normal frame rate of around 30 Hz (30 fps) the collection of photoelectrons can be toggled at rates up to 10 MHz. For the techniques described herein, such cyclic opening and closing of the electron collection could run at a much lower frequency of 50 kHz or so. In that case the light emitting portion 6 could also be modulated to produce the light conveying semantic information at that same frequency, which is no problem for generic light emitting diodes (LEDs).

In other embodiments, the video sequence obtained in step 93 can include image frames 60 that are obtained when the light emitting portion 6 is emitting light conveying the semantic information. Thus in the example shown in Figure 3, step 93 can comprise obtaining all four of the image frames 60 shown. In this case, step 95 comprises identifying image frames 60 that were obtained when the light emitting portion 6 was not emitting the light conveying the semantic information, and those identified image frames 60 are provided to the display screen 4. That is, in the example shown in Figure 3, step 95 can comprise identifying that image frames 60₂ and 60₄ correspond to when the light emitting portion 6 is not emitting light conveying the semantic information, and these image frames 60 can be provided to the display screen 4 for display to the user. The image frames 60 that were obtained when the light emitting portion 6 was emitting the light conveying the semantic information (e.g. image frames 60₁ and 60₃ in the example of Figure 3) can be discarded or dropped so that they are not displayed on the display screen 4. The control unit 8 can identify the image frames that were obtained when the light emitting portion 6 was not emitting light conveying the semantic information by comparing the obtained image frames to each other (particularly comparing consecutive image frames with each other). The comparison can compare features such as the brightness or colour, to identify those image frames where the light emitting portion 6 is emitting light conveying the semantic information. For example the light conveying the semantic information may increase the brightness of the user in the relevant image frames, and thus the images frames corresponding to when the light emitting portion 6 was not emitting light conveying the semantic information can be identified as the image frames with the lowest brightness. As another example, the light emitting portion 6 could be emitting red light to convey the semantic information, and thus the image frames having a lower red component can be identified as the image frames corresponding to when the light emitting portion 6 was not emitting light conveying the semantic information. In other embodiments, the control unit 8 can have information on the timing of the flickering of the light emitting portion 6 and can use this information to identify the image frames 60 that were obtained when the light emitting portion 6 was not emitting the light conveying the semantic information. In some cases, the control unit 8 can control the light emitting portion 6, including controlling the flickering, and thus this timing information can be readily available to the control unit 8.

In some embodiments, during the parts of the flicker cycle in which the light emitting portion 6 is not emitting light conveying the semantic information, the user can be lit or illuminated with white (or near-white) light. This light is preferably uniform (or as near uniform as practicable) to provide even lighting of the user. This lighting can be provided by the light emitting portion 6 switching to emitting white (or near-white) light when not emitting the light conveying the semantic information, or by a separate light source or light sources in the apparatus 2, or by a separate light source or sources in the environment of the apparatus 2 and the user (e.g. a ceiling or wall light).

It will be appreciated that in order for the apparatus 2 to provide a real-time (or near-time) 'reflection' for the user of the apparatus 2 on the display screen 4, steps 91, 93 and 95 are performed continuously and at generally the same time. That is, steps 91 and 93 occur at the same time and generally continuously in order to obtain the video sequence, and step 95 is performed on that obtained video sequence to determine the image frames 60 to be sent to the display screen 4 for display.

Although the solution described above provides a simple solution to the problem of the user being presented with image frames in which there is a colour-casting effect, it will be appreciated that this approach can lead to a reduction in the quality of the video sequence presented on the display screen 4, particularly the smoothness of the video, since the frame rate may be reduced to match the flicker rate of the light emitting portion 6 (or alternatively many (e.g. half) of the obtained image frames are discarded or dropped, thereby reducing the effective frame rate of the displayed video sequence). To counter this reduction in frame rate, it is possible to increase the frame rate of the imaging device 3 (i.e. to increase the rate at which the imaging device 3 obtains image frames 60), and increase the flicker rate, if possible, but this increases the processing burden on the control unit 8. It may also be a problem that where the semantic light is also used to illuminate the user (i.e. the light emitting portion 6 alternates between emitting semantic light and no light, but the semantic light is also provided in order to illuminate the user), the images frames in which this illumination is provided are discarded or dropped (or not captured), in which case the illumination effect of the semantic light is lost.

A further disadvantage associated with the embodiments where the user is lit with white (or near-white) light during the part of the flicker cycle when the light emitting portion 6 is not emitting light conveying the semantic information is that the user will perceive a reduced colour saturation in the semantic lighting, since the human eye will mix the alternating white light and semantic light from the light emitting portion 6 (or from the light emitting portion 6 and other light source) to one colour if the alternating/flickering frequency is above around 25 Hz.

It will also be appreciated that with the above solution a user can perceive a stroboscopic ghosting effect due to the flickering semantic lighting patterns induced by eye saccades (quick movements of the eye, for example when reading). However, these effects can be avoided by using a flickering frequency over around 2 KHz, although this frequency may be difficult to achieve in practice.

An alternative solution, which avoids or mitigates several of the disadvantages mentioned above, is described below with reference to the flow chart shown in Figure 5. In this solution one or more image frames obtained during parts of the flicker cycle in which the light emitting portion 6 is not emitting the light conveying semantic information are compared to image frames obtained during parts of the flicker cycle in which the light emitting portion 6 is emitting the light that conveys the semantic information in order to determine a correction to the colour-casting present in the image frames obtained when the light emitting portion 6 was emitting light conveying semantic information and/or to determine a correction to the illumination in the images frames obtained when the light emitting portion 6 was not emitting the light conveying semantic information.

Figure 5 illustrates a method of operating an apparatus 2 to provide semantic information to a user of the apparatus 2. As with the method in Figure 4, it is assumed that the user is in front of the imaging device 3 so that the imaging device 3 captures a video sequence of the user and the user is able to view their 'reflection' (the recorded video sequence) on the display screen 4. However, it will be appreciated that the presence of the user in front of the imaging device 3 is not necessary for the method to be performed.

In a first step, step 101, light conveying semantic information is emitted by a light emitting portion 6. Step 101 is similar to step 91 in Figure 4. Thus, light emitting portion 6 will emit the light with a flicker, which means that the light emitting portion 6 alternately emits light conveying semantic information and does not emit semantic light. In some embodiments, when the light emitting portion 6 is not emitting the light conveying the semantic information, the light emitting portion 6 is emitting white light in order to illuminate the user of the apparatus 2. In other embodiments, when the light emitting portion 6 is not emitting the light conveying the semantic information, the light emitting portion 6 is not emitting any light. In these embodiments, the light that conveys the semantic information is also used to illuminate the user. The frequency with which the light emitting portion 6 flickers is preferably high enough that most or all users of the apparatus 2 perceive the light emitting portion 6 to be 'on' (i.e. emitting light) continuously. A suitable frequency is 50Hz, but those skilled in the art will appreciate that other flicker frequencies can be used.

As noted above, light emitting portion 6 may 'naturally' flicker, e.g. light emitting portion 6 can flicker in response to an alternating current (AC), or it may flicker at a desired rate under control of the control unit 8 or light emitting portion 6.

For the purposes of this method, it is assumed that the control unit 8 determines the semantic information to be conveyed by the light emitting portion 6 and controls the light emitting portion 6 accordingly. It will be appreciated that the type of semantic information, and/or the way in which the semantic information is to be conveyed (e.g. a continuous light, a moving segment 20, etc.) does not affect the flicker operation of the light emitting portion 6.

While the light emitting portion 6 is operating to emit light conveying the semantic information in step 101, a video sequence is obtained by the imaging device 3 (step 103). That is, the imaging device 3 obtains a series of image frames 60 as the light emitting portion 6 operates to convey the semantic information. In this solution, the imaging device 3 obtains image frames 60 during all parts of the flicker cycle of the light emitting portion 6. That is, the imaging device 3 captures image frames when the light emitting portion 6 is emitting light to convey the semantic information and when the light emitting portion 6 is not emitting light that conveys the semantic information.

The video sequence obtained in step 103 comprises at least a first image frame 60 that is obtained when the light emitting portion 6 is emitting light conveying the semantic information and at least a second image frame 60 that is obtained when the light emitting portion 6 is not emitting light conveying the semantic information. It will be appreciated that depending on the flicker rate and frame rate of the imaging device 3, the first image frame 60 and the second image frame 60 can be successive image frames 60 obtained by the imaging device 3 (e.g. where one image frame 60 occurs when the light emitting portion 6 is emitting light conveying the semantic information, the next image frame 60 is obtained when the light emitting portion 6 is next not emitting light conveying the semantic information). Where more than one image frame 60 is obtained during each part of the flicker cycle (e.g. two or more image frames 60 are obtained by the imaging device 3 before the light emitting portion 6 alternates between emitting light conveying the semantic information and not emitting light conveying the semantic information), the first and second image frames 60 can be obtained in successive parts of the flicker cycle (e.g. the first image frame 60 could be image frame 60i in Figure 3 and the second image frame 60 could be the image frame 60₂ in Figure 3).

Next, in step 105, which can be performed by the control unit 8, the first image frame 60 (which will be referred to as image frame 60₁ in the following description) and the second image frame (which will be referred to as image frame 60₂ in the following description) are processed to determine a colour-casting effect and/or an illumination (brightness) effect of the light conveying the semantic information on the user. This step can comprise determining a difference between the first image frame 60₁ and the second image frame 60₂. In some embodiments, a correction to the first image frame 60₁ is determined that is based on the colour-casting effect of the light conveying the semantic information on the user in the first image frame 60₁. In addition, or alternatively, a correction to the second image frame 60₂ is determined that is based on an illumination effect of the light conveying semantic information on the first image frame 60₁.

Then, a corrected image frame is determined from the correction determined in step 105 (step 107). Thus, where a correction to the first image frame 60₁ is determined that is based on the colour-casting effect of the light conveying the semantic information on the user in the first image frame 60₁, a corrected first image frame is determined from the first image frame 60i and the determined correction. Where a correction to the second image frame 60₂ is determined that is based on the illumination effect of the light conveying the semantic information on the user in the first image frame 60₁, a corrected second image frame is determined from the second image frame 60₂ and the determined correction.

The corrected image frame determined in step 107 is provided to the display screen 4 to the display screen 4 for display to the user as part of a video sequence (step 109). The method in steps 101-107 is repeated for each new frame to provide a series of corrected image frames (i.e. a video sequence) for display to the user.

Where step 107 comprises determining a corrected second image frame 60₂, the corrected second image frame 60₂ is displayed, and the first image frame 60₁ and subsequent image frames obtained when the light emitting portion 6 is emitting light conveying semantic information are not displayed to the user, and thus the video sequence to be displayed comprises a series of corrected second image frames.

Where step 107 comprises determining a corrected first image frame 60₁, the corrected first image frame 60₁ is displayed, and the second image frame 60₂ and subsequent image frames obtained when the light emitting portion 6 is not emitting light conveying semantic information are not displayed to the user, and thus the video sequence to be displayed comprises a series of corrected first image frames.

In some embodiments, the first image frame 60₁ can be corrected for the colour-casting of the light conveying semantic information to form a corrected first image frame, and the second image frame 60₂ can be corrected for the illumination provided by the light conveying semantic information to form a corrected second image frame, and both the corrected first image frame and the corrected second image frame are used to form the video sequence to be displayed to the user.

It will be appreciated that in order for the apparatus 2 to provide a real-time (or near-time) 'reflection' for the user of the apparatus 2 on the display screen 4, steps 101-109 are performed continuously and at generally the same time. That is, steps 101 and 103 occur at the same time and generally continuously in order to obtain the video sequence, and steps 105 and 107 are performed on obtained pairs of image frames to determine the image frames 60/corrected image frames to be sent to the display screen 4 for display.

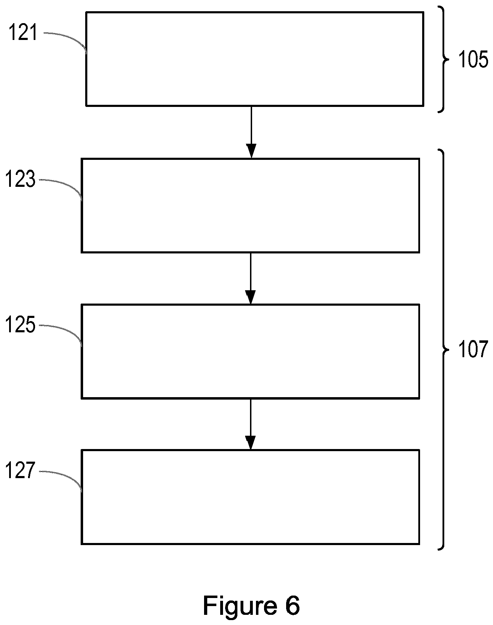

The flow chart in Figure 6 illustrates an exemplary implementation of steps 105 and 107 of Figure 5. Two implementations of steps 105 and 107 are described below. In a first implementation of Figure 6 a correction to the second image frame 60₂ is determined that is based on an illumination effect of the light conveying semantic information on the first image frame 60₁. In a second implementation of Figure 6 a correction to the first image frame 60₁ is determined that is based on a colour-casting effect of the light conveying semantic information on the first image frame 60₁.

In the first exemplary implementation, the first image frame 60₁, which is obtained when the user is lit or illuminated by the light conveying the semantic information, is referred to as *Litlmg,* and the second image frame 60₂, which is obtained when the user is not lit or illuminated by the light conveying the semantic information, or other light from the light emitting portion 6, is referred to as *Unlitlmg.*

Briefly, in the processing shown in Figure 6, for a particular pixel, determining the difference (e.g. by subtracting) of the pixel value for the pixel in the first image frame 60₁ and the value for the corresponding pixel (i.e. in the same spatial position in the image frame) in the second image frame 60₂, which results in *LightContr_{xy},* which corresponds to the light contribution of the semantic lighting on this pixel. This light contribution may be colour skewed, and so this colour skewing is corrected towards a white light contribution with the same brightness. This white light contribution (referred to as corrected *LightContr_{xy}*) is then added to the pixel in the second image frame 60₂. Performing these steps for each pixel in the second image frame 60₂ results in a corrected white lit image.

Thus, in step 121, to determine an illumination effect of the light conveying the semantic information on the user in *Litlmg* (step 105), a difference between the two image frames (*UnlitImg* and *LitImg*) is determined. This difference is determined on a pixel level, meaning that the difference between the two image frames is determined for each pixel in an image frame. Thus, in step 121, image subtraction can be used to calculate the chromatic and amplitudinal light contribution of the light conveying the semantic information in the lit image, which can be conceptually defined as *LightContr_{xy} = LitImg_{xy}* - *UnlitImg_{xy},* where xy represents a particular pixel in the image frame (in terms of an x-y position). Thus, *LightContr_{xy}* comprises a difference value(s) for each pixel in the image frame.

Next, steps 123-127 are performed to determine a corrected second image frame (step 107). Firstly, in step 123, every element (where each element corresponds to a respective pixel of an image frame) of *LightContr_{xy}* is chromatically corrected towards a pure white/white-balanced value. It will be appreciated that for this step to work the light conveying the semantic information should have at least some white component, since the red, green and blue components of the image frame are required to be non-zero.

Next, in step 125, the amplitude of every element (pixel) of the chromatically-corrected *LightContr_{xy}* is corrected to bring it to a single (common) level (e.g. amplitude). In some embodiments, this single level is equal to the highest or average amplitude found within all of the elements (pixels) of *LightContr_{xy}.* The output of steps 123 and 125 is referred to as the corrected *LightContr_{xy},* and this represents the correction to be added to the unlit image *(Unlitlmg)* to provide the illumination effect of the light conveying the semantic information.

As an example of steps 123 and 125, consider a pixel in the unlit image frame 60₂ that has a RGB (red, green and blue) value of (40, 30, 10), so red(R) = 40, green(G) = 30 and blue(B) = 10, in a range of 0 to 127. The balance for this pixel is that green is ¾ of red, and blue is ¼ of red. In *LightContr_{xy},* the balance for this pixel will be different, say R = 100, G = 40, B = 20. This then needs to be corrected to the same balance, so, e.g. R = 100, G = 75, B = 25, but this conversion will increase the brightness, so it needs to be scaled back to a value in which the sum of the RGB values remains the same. The original pixel in *LightContr_{xy}* had a brightness of 160 (100 + 40 + 20), so the balanced corrected pixel should then be R = 80, G = 60, B = 20 (which also adds up to 160). This balanced corrected pixel forms part of the corrected *LightContr_{xy}.*

Finally, in step 127, the corrected *LightContr_{xy}* is added to the *Unlitlmg* via image addition to arrive at the corrected second image frame *Corrlmg.* This correction, for each pixel in *Unlitlmg* can be conceptually defined as *CorrImg_{xy} = UnlitImg_{xy}* + *corrected LightContr_{xy}.*

In the above example of steps 123 and 125, adding the corrected *LightContr_{xy}* to the *Unlitlmg* in step 127 will result in a RGB value of the pixel in the corrected second image frame *Corrlmg* of R = 120 (40 + 80), G = 90 (30 + 60), B = 30 (10 + 20).

Thus, in step 109, the corrected second image frame *Corrlmg* is provided to the display screen 4 so that it is displayed to the user on the display screen 4. The method in steps 121-127 is repeated for each new *Unlitlmg* frame to provide a series of corrected second image frames. In this embodiment, the first image frame (*LitImg*) and subsequent image frames obtained when the light emitting portion 6 is emitting light conveying semantic information are not displayed to the user, and thus the video sequence to be displayed comprises a series of corrected second image frames (i.e. a series of corrected *Unlitlmg* frames).

A second implementation of Figure 6 provides that a correction to the first image frame 60₁ is determined that is based on a colour-casting effect of the light conveying semantic information on the first image frame 60₂. As in the above exemplary implementation, the first image frame 60₁, which is obtained when the user is lit or illuminated by the light conveying the semantic information, is referred to as *Litlmg,* and the second image frame 60₂, which is obtained when the user is not lit or illuminated by the light conveying the semantic information, or other light from the light emitting portion 6, is referred to as *Unlitlmg.*

Briefly, in the processing shown in Figure 6, for a particular pixel, subtracting the pixel value for the pixel in the first image frame 60₁ from the value for the pixel in the second image frame 60₂ results in *LightContr_{xy},* which corresponds to the light contribution of the semantic lighting on this pixel. This light contribution may be colour skewed, and so this colour skewing is corrected towards a white light contribution with the same brightness. This white light contribution (referred to as corrected *LightContr_{xy}*) is then added to the pixel in the first image frame 60₁. Performing these steps for each pixel in the first image frame 60₂ results in an image frame that has been corrected for colour-casting.

Thus, in step 121, to determine a colour-casting effect of the light conveying the semantic information on the user in *Litlmg* (step 105), a difference between the two image frames (*UnlitImg* and *LitImg*) is determined. This difference is determined on a pixel level, meaning that the difference between the two image frames is determined for each pixel in an image frame. Thus, in step 121, image subtraction can be used to calculate the chromatic and amplitudinal light contribution of the light conveying the semantic information in the lit image, which can be conceptually defined as *LightContr_{xy} = LitImg_{xy}* - *UnlitImg_{xy},* where xy represents a particular pixel in the image frame (in terms of an x-y position). Thus, *LightContr_{xy}* comprises a difference value(s) for each pixel in the image frame.

Next, steps 123-127 are performed to determine a corrected first image frame (step 107). Firstly, in step 123, every element (where each element corresponds to a respective pixel of an image frame) of *LightContr_{xy}* is chromatically corrected towards a pure white/white-balanced value. It will be appreciated that for this step to work the light conveying the semantic information should have at least some white component, since the red, green and blue components of the image frame are required to be non-zero.

Next, in step 125, the amplitude of every element (pixel) of the chromatically-corrected *LightContr_{xy}* is corrected to bring it to a single level (e.g. amplitude). In some embodiments, this single level is equal to the highest or average amplitude found within all of the elements (pixels) of *LightContr_{xy}.* The output of steps 123 and 125 is referred to as the corrected *LightContr_{xy},* and this represents the correction to be added to the lit image (*LitImg*) to correct for the colour-casting effect of the light conveying the semantic information.

Finally, in step 127, the corrected *LightContr_{xy}* is added to the *Litlmg* via image addition to arrive at the corrected first image frame *Corrlmg.* This correction, for each pixel in *Litlmg* can be conceptually defined as *CorrImg_{xy}* = *LitImg_{xy}* + *corrected LightContr_{xy}.*

Thus, in step 109, the corrected first image frame *Corrlmg* is provided to the display screen 4 so that it is displayed to the user on the display screen 4. The method in steps 121-127 is repeated for each new *Litlmg* frame to provide a series of corrected first image frames. In this embodiment, the second image frame (*UnlitImg*) and subsequent image frames obtained when the light emitting portion 6 is not emitting light conveying semantic information are not displayed to the user, and thus the video sequence to be displayed comprises a series of corrected first image frames (i.e. a series of corrected *Litlmg* frames).

It will be appreciated that in addition to colour-casting (shadowing) being caused by the light conveying semantic light, colour-casting can also be caused by ambient light in the environment of the user and apparatus 2. For example, light coming through a window in the environment, e.g. red light in the evening at sunset, may also cause colour-casting on the user. In that case, since this colour-casting will occur even during parts of the flicker cycle in which the light emitting portion 6 is not emitting light conveying the semantic information (and thus the comparison between the first image frame 60₁ and the second image frame 60₂ cannot be used to identify this light contribution), before correction of the first image frame 60₁ or the second image frame 60₂ depending on the particular embodiment according to the above techniques, the method can also comprise correcting the image frames for ambient light. In this case, the apparatus 2 will need to use a reference image frame, for example obtained when the user is lit or illuminated uniformly by white light. Thus, prior to step 121/105 the first image frame 60₁ and second image frame 60₂ can be corrected for the chromatically-skewed (also known as colour-skewed) ambient light, for example using conventional white balancing techniques after comparing the reference image frame to the first image frame and the second image frame, before the corrected image frame is further corrected according to steps 121-127 for the illumination provided by the semantic light. It should be noted that it is assumed that the chromatically-skewed ambient light affects the whole face of the user, so that standard white balancing techniques are sufficient to correct this. If this is not the case, for example due to the particular positioning of a window the ambient light only falls on one side of the face of the user, then an alternative solution could be used to address the colour-casting, for example the first solution described above with reference to Figure 4 in which the user is uniformly lit using white or near-white light during the parts of the flickering cycle in which the light emitting portion 6 is not emitting light conveying the semantic information.

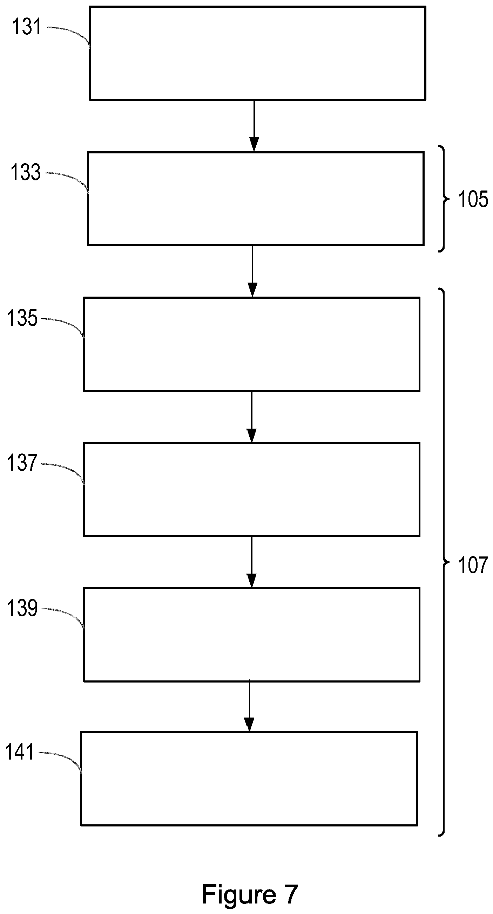

The flow chart in Figure 7 illustrates another exemplary implementation of steps 105 and 107 of Figure 5 that avoids, or at least reduces the occurrence of a stroboscopic ghosting effect. Briefly, in this implementation, a lower flickering frequency of the light emitting portion 6 is used in combination with facial tracking to correct obtained image frames for colour-casting (shadowing), similar to the second implementation of Figure 6 described above.

In this exemplary implementation, the flickering cycle of the light emitting portion 6 is not evenly split between emitting semantic light and not emitting semantic light. Instead, the light emitting portion 6 is controlled so that the flickering cycle (also referred to as a duty cycle) is such that the light emitting portion 6 emits light conveying the semantic information longer than it does not emit light conveying the semantic information. For example the flickering/duty cycle can be such that the user is lit or illuminated by the light conveying the semantic information for >500 milliseconds, and the user is not lit (unlit) for <10 milliseconds. This equates to a flickering/duty cycle of around 0.2% (i.e. the user is unlit for 0.2% of the time). Thus, in this implementation, per flickering cycle, the imaging device 3 obtains a series (n) of consecutive image frames when the user is lit by the semantic light, with each of these 'first' image frames 60 being referred to as *LitImgⁿ,* and a second image frame 60₂ that is obtained when the user is not lit or illuminated by the light conveying the semantic information, that is referred to as *Unlitlmg.*

In a first step, step 131, that occurs after steps 101 and 103 but prior to step 105, the control unit 8 analyses each obtained image frame 60 to identify the user's face and landmarks or reference points on the face. Thus, for example, the control unit 8 can use a facial tracking algorithm to determine the parts of each image frame 60 that correspond to the area of the user's face, and then segment the area into multiple sections or segments related to facial landmarks, such as the nose, eyes, eyebrows, hair line, chin, cheeks, etc. Each of these segments is labelled in *Unlitlmg* and the image series *LitImgⁿ.*

Next, in step 133, to determine a colour-casting effect of the light conveying the semantic information on the user in *Litlmg* (step 105), a difference between the lit image frame closest in time to the unlit image frame (i.e. a difference between each *LitImg¹ and Unlitlmg*) is determined. This difference is determined on a pixel level, meaning that the difference between the two image frames is determined for each pixel in an image frame. Thus, in step 133, image subtraction can be used to calculate the chromatic and amplitudinal light contribution of the light conveying the semantic information in the lit image, which can be conceptually defined as *LightContr¹_{xy} = LitImg¹_{xy}* - *UnlitImg_{xy},* where xy represents a particular pixel in the image frame (in terms of an x-y position). Thus, *LightContr¹_{xy}* comprises a difference value(s) for each pixel in the image frame.

Next, steps 135 and 137 are performed to determine a corrected first image frame (step 107). Firstly, in step 135, every element (where each element corresponds to a respective pixel of an image frame) of *LightContr¹_{xy}* a correction vector *CorrVect_{xy}* is calculated to chromatically correct *LightContr¹_{xy}* towards a pure white value without affecting the brightness. It will be appreciated that for this step to work the light conveying the semantic information should have at least some white component. Steps 135 and 137 are similar to steps 123 and 125 described above.

*CorrVect_{xy}* now corresponds to the correction required to the lit image (*LitImg*) to remove or compensate for the colour-casting caused by the light conveying the semantic information.

Next, in step 139, the elements (pixels) of *CorrVect_{xy}* are segmented (e.g. by clustering) according to the facial tracking segments, referred to as *CorrVect_{segxy}.*

Finally, in step 141, every segment in each of the n lit image frames identified in step 131 is corrected by applying the relevant CorrVect_{segxy}, which means that the segments within *CorrVect_{seg}* are morphed and mapped onto the corresponding segments in *LitImgⁱ* to take account of face rotations and deformations between the unlit image and that lit image i. This can be expressed as *CorLitImg^{i(seg)} = LitImg^{i(seg)}* x (morphed & mapped) *CorrVect_{seg}.* This results in the corrected image set *CorLitImgⁿ.* That is, the image information in a triangle of facial landmarks in a first image frame is mapped onto the triangle of landmarks in a second image frame. The landmarks in the second image frame may have different coordinates, such that the triangle has a different shape than the triangle in the first image. The image information found in the first triangle is made to fit in the second triangle via morphing (which is a technique known to those skilled in the art).

This corrected image set *CorLitImgⁿ* is provided to the display screen 4 for display to the user (step 109) in (or close to) real-time, after which the processing starts over again for the next flicker cycle.

Thus, there is provided an improved apparatus and method of operating an apparatus that minimises the effect of light conveying semantic information on a user.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality. A single processor or other unit may fulfil the functions of several items recited in the claims. The mere fact that certain measures are recited in mutually different dependent claims does not indicate that a combination of these measures cannot be used to advantage. A computer program may be stored/distributed on a suitable medium, such as an optical storage medium or a solid-state medium supplied together with or as part of other hardware, but may also be distributed in other forms, such as via the Internet or other wired or wireless telecommunication systems. Any reference signs in the claims should not be construed as limiting the scope.

## Claims

1. A method of operating an apparatus to provide semantic information to a user, the method comprising:
emitting light conveying semantic information using a light emitting portion, wherein the light emitting portion flickers between emitting the light conveying the semantic information and not emitting the light conveying the semantic information;
obtaining a video sequence comprising a plurality of image frames, wherein the video sequence comprises at least a first image frame that is obtained when the light emitting portion is emitting light conveying the semantic information and at least a second image frame that is obtained when the light emitting portion is not emitting light conveying the semantic information;
processing the first image frame and the second image frame to determine a colour-casting and/or illumination effect of the light conveying the semantic information on the user;
determining a corrected first image frame from the first image frame and the determined colour-casting effect and/or determining a corrected second image frame from the second image frame and the determined illumination effect; and
providing the corrected image frame to the display screen as part of a video sequence for display to the user.

2. A method as claimed in claim 1, wherein the step of processing comprises determining a light contribution of the light conveying semantic information on each pixel in the first image frame by determining the difference between the pixel value of each pixel in the first image frame and the pixel value of the corresponding pixel in the second image frame.

3. A method as claimed in claim 2, wherein the step of determining comprises processing the determined colour-casting and/or illumination effect of the light conveying the semantic information on the user to chromatically correct each determined difference value to a white balanced value and to correct the amplitude of each chromatically-corrected difference value to a common level.

4. A method as claimed in claim 3, wherein the step of determining comprises combining the amplitude and chromatically-corrected difference values with the first image frame to determine a corrected first image frame and/or combining the amplitude and chromatically-corrected difference values with the second image frame to determine a corrected second image frame.

5. A method as claimed in any of claims 1-4, wherein the step of processing comprises determining a colour-casting effect of the light conveying the semantic information on the user, the step of determining comprises determining a corrected first image frame from the first image frame and the determined colour-casting effect; and the step of providing comprises providing the corrected first image frame to the display screen as part of a video sequence for display to the user; and wherein the second image frame is not provided to the display screen as part of the video sequence.

6. A method as claimed in any of claims 1-5, wherein the step of processing comprises determining an illumination effect of the light conveying the semantic information on the user, the step of determining comprises determining a corrected second image frame from the second image frame and the determined illumination effect; and the step of providing comprises providing the corrected second image frame to the display screen as part of a video sequence for display to the user; and wherein the first image frame is not provided to the display screen as part of the video sequence.

7. A method as claimed in any of claims 1-6, wherein the step of obtaining comprises obtaining a plurality of consecutive first image frames that are obtained when the light emitting portion is emitting light conveying the semantic information and a second image frame that is obtained when the light emitting portion is not emitting light conveying the semantic information, and the method further comprises the step of:
analysing each of the plurality of first image frames and the second image frame to identify segments based on reference points on a face of the user identified in the image frames;
wherein the step of processing comprises determining a colour-casting effect of the light conveying the semantic information on the user for each segment;
wherein the step of determining comprises determining a plurality of corrected first image frames from the plurality of consecutive first image frames and the determined colour-casting effect by applying the determined colour-casting effect for each segment to the respective segment in each of the plurality of first image frames; and
wherein the step of providing comprises providing the plurality of corrected first image frames to the display screen as part of a video sequence for display to the user.

8. A method as claimed in any of claims 1-7, wherein the steps of processing, determining and providing are performed for a plurality of first image frames and second image frames to form the video sequence to be displayed to the user.

9. An apparatus comprising:
an imaging device for obtaining a video sequence, the video sequence comprising a plurality of image frames;
a display screen for presenting a plurality of image frames;
a light emitting portion for using light to convey semantic information to the user, wherein the light emitting portion is configured to flicker between emitting the light conveying the semantic information and not emitting the light conveying the semantic information; and
a control unit;
wherein the imaging device is configured to obtain at least a first image frame when the light emitting portion is emitting light conveying the semantic information and at least a second image frame when the light emitting portion is not emitting light conveying the semantic information;
wherein the control unit is configured to:
process the first image frame and the second image frame to determine a colour-casting and/or illumination effect of the light conveying the semantic information on the user;
determine a corrected first image frame from the first image frame and the determined colour-casting effect and/or determine a corrected second image frame from the second image frame and the determined illumination effect; and
control the display screen to present the corrected image frame to the user as part of a video sequence.

10. A method of operating an apparatus to provide semantic information to a user, the method comprising:
emitting light conveying semantic information using a light emitting portion, wherein the light emitting portion flickers between emitting the light conveying the semantic information and not emitting the light conveying the semantic information;
obtaining a video sequence comprising a plurality of image frames; and
providing image frames obtained when the light emitting portion is not emitting the light conveying the semantic information to a display screen for display to the user.

11. A method as claimed in claim 10, wherein the step of obtaining comprises:
obtaining images frames only when the light emitting portion is not emitting the light conveying the semantic information.

12. A method as claimed in claim 10, wherein the step of providing comprises:
identifying which of the obtained image frames were obtained when the light emitting portion was not emitting the light conveying the semantic information; and providing the identified image frames to the display screen.

13. A method as claimed in any of claims 10-12, wherein the light emitting portion or a second light source emits white light in the part of the flicker cycle in which the light emitting portion is not emitting the light conveying the semantic information.

14. An apparatus comprising:
an imaging device for obtaining a video sequence, the video sequence comprising a plurality of image frames;
a display screen for presenting a plurality of image frames;
a light emitting portion for using light to convey semantic information to the user, wherein the light emitting portion is configured to flicker between emitting the light conveying the semantic information and not emitting the light conveying the semantic information; and
a control unit;
wherein the control unit is configured to provide image frames obtained by the imaging device when the light emitting portion is not emitting the light conveying the semantic information to the display screen.

15. A computer program product comprising a computer readable medium having computer readable code embodied therein, the computer readable code being configured such that, on execution by a suitable computer or processor, the computer or processor is caused to perform the method of any of claims 1-8 or 10-13.
